Europäisches Patentamt

(19) European Patent Office

Office européen des brevets

(11) Publication number: **0 133 169**

**A1**

# (12) EUROPEAN PATENT APPLICATION

(21) Application number: **84850192.0**

(22) Date of filing: **18.06.84**

(51) Int. Cl.⁴: **G 01 N 1/28**

(30) Priority: **23.06.83 SE 8303605**

(43) Date of publication of application:
**13.02.85 Bulletin 85/7**

(84) Designated Contracting States:
**CH DE FR GB LI SE**

(71) Applicant: **Swelab Instrument AB**
**P.O. Box 839**
**S-121 08 Johanneshov(SE)**

(72) Inventor: **Öhlin, Erik**
**Krusbärsstigen 6**
**S 182 75 Stocksund(SE)**

(74) Representative: **Nyberg, Bengt et al,**
**Sture V Moberg AB Kungstensgatan 48**
**S-113 59 Stockholm(SE)**

(54) **Method and apparatus for dilution of liquid samples.**

(57) Dilution of liquid samples is effected by drawing one sample at a time through an aspirating tube (12) dipped into the sample and through a volumetrically calibrated measuring passageway (17) in a movable valve body (16) of a metering valve (11), whereupon the valve body (16) is moved and the sample volume trapped in the measuring passageway (17) is expelled into a mixing vessel (23) together with a predetermined, many times larger volume of liquid diluent such that the diluent rinses the measuring passageway. Further rinsing of the valve body (16) is then effected with wash liquid. Wash liquid is also passed to a rinsing vessel (32) in which the end portion of the aspirating tube (12) previously dipped into the sample is inserted so that this end portion is rinsed exteriorly with the wash liquid. In a final step, wash liquid in the rinsing vessel (32) is drawn through the aspirating tube (12) to rinse it interiorly, whereupon air is drawn until the aspirating tube and the measuring passageway (17) are emptied of liquid.

## Method and apparatus for dilution of liquid samples

This invention relates to a system for supplying successive liquid samples, particularly blood samples, into sample processing apparatus in conjunction with dilution of the samples. More particularly, the invention relates to a method and apparatus for cleaning of a sample supply tube and elements connected therewith and exposed to the samples so that residues of a first sample are prevented from contaminating a subsequently supplied sample.

It is common practice in the more or less automated serial analysis of blood samples, for example, to supply metered volumes of successive samples to the analytical apparatus by way of a diluter having a sample supply tube with a free end which can be dipped into the containers holding the samples. A portion of each sample is aspirated through the sample supply tube to a diluter valve which traps or isolates a predetermined volume of the sample and mixes it with a predetermined volume of liquid diluent. In many cases the solution thus obtained is further diluted by isolating a predetermined volume of it and mixing the isolated volume with a predetermined additional volume of a liquid diluent.

A diluter of the just-mentioned kind is disclosed in European Patent Application No. 83850074.2/89937 to which reference is made for a more detailed description.

In sample processing systems of the kind referred to it is necessary to prevent sample residues left in the metering and diluting apparatus from contacting and contaminating subsequent samples to a degree such that the accuracy of the analysis is untolerably affected. Such residues may be in the form of droplets on the inner side of the sample supply tube and passages in the diluter which communicate with the sample supply tube, or on the outer side of the end portion of the sample supply tube dipped into the sample.

An object of the invention is to accomplish a rapid and efficient washing away of sample residues using very little additional equipment.

In accordance with the invention there is provided a method for dilution of liquid samples, in which one sample at a time is introduced into a free sample supply tube end dipped into the sample and then conveyed through the sample supply tube to a volumetrically calibrated measuring passageway in a movable valve body of a metering valve, whereupon a volume of the sample isolated in the measuring passageway is expelled therefrom and mixed with a predetermined, many times larger volume of liquid diluent conveyed through the measuring passageway such that the liquid diluent rinses away residues of said isolated sample volume from the measuring passageway. The method is characterised in that after the sample has been conveyed to the measuring passageway a rinsing vessel is moved to a rinsing position in engagement with said free end portion of the sample supply tube and said end portion is rinsed both on the outer side and the inner side with wash liquid supplied to the rinsing vessel.

In accordance with the invention there is also provided apparatus for dilution of successive liquid samples, comprising a metering valve including a movable valve body provided with a volumetrically calibrated measuring passageway, and also including a sample supply tube having a free end, the apparatus further comprising means for passing liquid sample, liquid diluent and wash liquid through the metering valve. The apparatus is characterised by a rinsing vessel receptive of the free end portion of the sample supply tube and having a wash liquid inlet, and in that the rinsing vessel is movable between a position in which the free end portion of the sample supply tube dips into the rinsing vessel and a position away from the free end portion of the sample supply tube.

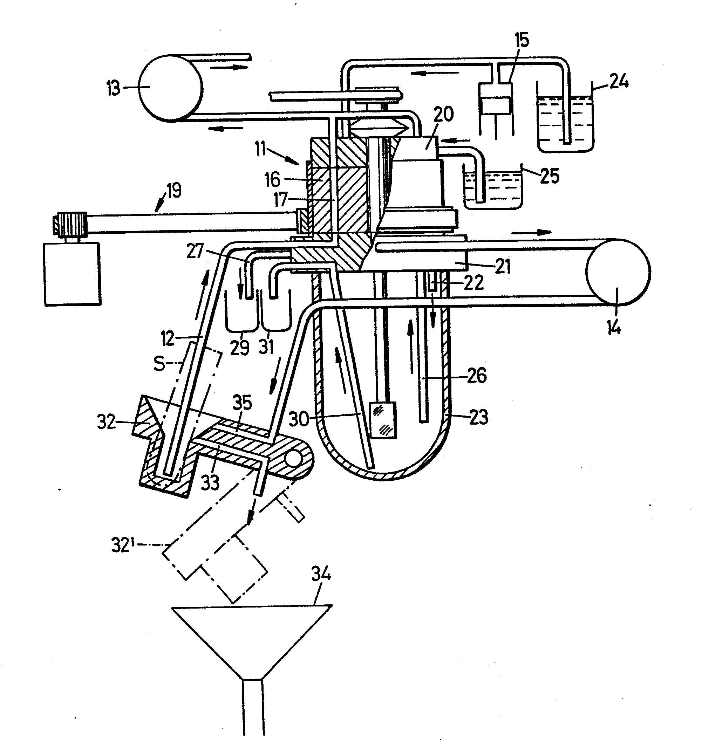

The invention is described in greater detail hereinafter with reference to the accompanying diagrammatic drawing the single figure of which is an elevational view, partly in cross-section, of a diluter apparatus embodying the invention.

Apart from certain modifications to be described below, the diluter apparatus shown in the drawing is constructed and operates as shown and described in European Patent Application No. 83850074.2/89937 and, therefore, is here described only to the extend required for a full understanding and application of the present invention. For a more detailed description of the apparatus, reference is made to the specification of the just-mentioned application.

As shown in the drawing, the apparatus according to the invention comprises a metering valve 11 including a sample supply tube 12 in the form of an aspirating tube having a free end adapted to be dipped into a sample tube or other sample container. Connected to the metering valve 11 are a pair of peristaltic suction pumps 13 and 14 and a piston-type pressure pump 15 for liquid diluent.

A rotatable valve body 16 of the metering valve 11 is formed with a volumetrically calibrated measuring passageway 17. The valve body 16 can be rotated unidirectionally by a valve actuator 19 to be positioned in a plurality of different positions in which the measuring passageway 17 is in open communication with different pairs of passages formed in a stationary top plate 20 and a stationary bottom plate 21 of the valve 11. One such position is shown in the drawing, in which the measuring passageway 17 communicates with the sample supply tube 12 on the one hand and with the suction pump 13 on the other hand through passages formed in the plates 20 and 21.

The procedure whereby a liquid sample is diluted is as follows:

A container, such as a sample tube S, holding the liquid sample, which is here presumed to be blood, is moved to the position shown in phantom lines in the drawing so that the free end of the sample supply tube 12 dips into the sample. The pump 13 is operated to draw blood until the leading end of the column of blood has passed the upper end of the measuring passageway 17 but not reached the pump. After the valve body 16 has been rotated to a second position, the volume of blood trapped or isolated in the measuring passageway 17 is expelled therefrom through an outlet tube 22 into a mixing vessel 23 together with a predetermined volume of liquid diluent fed by the pump 15 from a diluent supply container 24. The volume of liquid diluent is many times, such as 100 to 500 times, larger than the volumetric capacity of the measuring passageway 17. The solution formed in the mixing vessel 23 thus is of very low concentration.

Following movement of the valve body 16 to a third position and rinsing the measuring passageway 17 with wash liquid drawn from a supply container 25 by the pump 14, the valve body 16 is moved to a fourth position, in which the pump 13 draws a portion of the solution from the mixing vessel 23 through an aspirating tube 26 and through the measuring passageway 17 to completely fill this passageway.

The valve body 16 is then moved further to a fifth position in which the volume of diluted solution isolated in the measuring passageway 17 is expelled through an outlet tube 27 into a receiving vessel 29 together with a predetermined volume of liquid diluent fed from the container 24 by the pump 15. In this case too, the volume of liquid diluent is many times, one or several hundred times, larger than the volumetric capacity of the measuring passageway 17. Thus, the concentration of the twice diluted solution in the receiving vessel 29 is very much lower than that of the once diluted solution in the mixing vessel 23. The portion of the once diluted solution remaining in the mixing vessel 23 is transferred through a tube 30 to a second receiving vessel 31 by pressurizing the mixing vessel 23.

As a final step, the valve body 16 is rotated further until it again is in the first position in which the measuring passageway 17 again communicates with the sample supply tube 12 and the pump 13 so that a new sample can be aspirated.

In respect of the steps of the dilution procedure described this far, the procedure is the same as that described in the above-mentioned European patent application. The modifications embodied in the system shown in the drawing are as follows.

Initially, a pivotally mounted rinsing vessel 32 is moved from the position shown in full lines to the position shown in phantom lines at 32' so that the sample tube S can be engaged with the sample supply tube 12 as described above. Following removal of the sample tube S, the rinsing vessel 32 automatically returns to the full line position.

The rinsing vessel 32 is provided with an overflow passage 33 opening above a waste collecting vessel 34. Above the overflow passage 33, the rinsing vessel 32 has an inlet passage 35 connected to the outlet of the wash liquid pump 14. As described in the above-mentioned European patent application, the pump 14 constantly draws wash liquid from the vessel 25 through the metering valve 11 in contact with surfaces of the valve body 16 exposed to the liquid sample. According to the present invention, this wash liquid, instead of being passed directly to waste, is discharged into the rinsing vessel 32. Thus, after a sample has been aspirated, the outer side of the sample supply tube 12 is rinsed with wash liquid supplied through the valve 11. This wash liquid may be somewhat contaminated with sample residues rinsed away from the valve body 16, but in actual practice the amount of any entrained residues is extremely small in relation to the volume of the wash liquid so that the contamination is insignificant.

Following the return of the valve body 16 to the first position with the measuring passageway 17 communicating with the sample supply tube 12 and the pump 13, wash liquid is drawn by the pump 13 through the sample supply tube 12 from the rinsing vessel 32. Accordingly, the inner side of the sample supply tube 12 is also rinsed. The drawn volume of wash liquid is sufficiently large to ensure rinsing of the measuring passageway 17 as well. Because the flow rate of wash liquid supplied through the inlet passage 35 is lower than the flow rate of the wash liquid drawn through the sample supply tube 12, the rinsing vessel 32 will be emptied. As a consequence, the pump 13 will eventually aspirate air through the sample supply tube 12. Air is aspirated until the sample supply tube 12 and the measuring passageway 17 are emptied of liquid. The system then is ready for a new dilution cycle.

The only modification of the apparatus of the above-mentioned European patent application that is required according to the present invention consists in the addition of the rinsing vessel 32 and the connection of the discharge side of the wash liquid pump 14 to the rinsing vessel 32. Accordingly, no additional pump for the rinsing of the sample supply tube 12 is required.

It has been found that although the wash liquid fed to the rinsing vessel 32 is not uncontaminated, a cleaning of the sample supply tube that is quite satisfactory for practical purposes can be achieved.

Claims

1. A method for dilution of liquid samples, in which one sample at a time is introduced into a free end portion of a sample supply tube dipped into the sample and then conveyed through the sample supply tube to a volumetrically calibrated measuring passageway in a movable valve body of a metering valve, whereupon a volume of the sample isolated in the measuring passageway is expelled therefrom and mixed with a predetermined, many times larger volume of liquid diluent conveyed through the measuring passageway such that the liquid diluent rinses away residues of said isolated sample volume from the measuring passageway, characterised in that after the sample has been conveyed to the measuring passageway (17) a rinsing vessel (32) is moved to a rinsing position in engagement with said free end portion of the sample supply tube (12) and said end portion is rinsed both on the outer side and the inner side with wash liquid supplied to the rinsing vessel (32).

2. A method as claimed in claim 1, characterised in that after the sample volume isolated in the measuring passageway (17) has been expelled therefrom and mixed with the liquid diluent, the valve body of the metering valve (11) is rinsed with wash liquid which is then conveyed from the metering valve (11) to the rinsing vessel (32).

3. A method according to claim 2, characterised in that wash liquid is aspirated through the sample supply tube (12) from the rinsing vessel (32) whereupon air is aspirated until both the sample supply tube (12) and the measuring passageway (17) are emptied of liquid.

4. Apparatus for dilution of successive liquid samples, comprising a metering valve (11) including a movable valve body (16) provided with a volumetrically calibrated measuring passageway (17), and also including a sample supply tube having a free end, the apparatus further comprising means for passing liquid sample, liquid diluent and wash liquid through the metering valve, characterised by a rinsing vessel (32) receptive of the free end portion of the sample supply tube (12) and having a wash liquid inlet (35), and in that the rinsing vessel (32) is movable between a position in which the free end portion of the sample supply tube (12) dips into the rinsing vessel and a position away from the free end portion of the sample supply tube (12).

5. Apparatus according to claim 4, characterised in that the rinsing vessel (32) has an overflow (33) for wash liquid.

6. Apparatus according to claim 4 or 5, characterised in that the wash liquid inlet (35) of the rinsing vessel (32) is connected to a wash liquid outlet of the metering valve (11) to receive wash liquid therefrom.

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 221 726 (COULTER ELECTRONICS) * page 2, line 25 to page 4, line 7; page 9, line 18 to page 12, line 29; page 14, lines 1-10; figures 4,6-8 * | 1,4 | G 01 N   1/28 |
| | --- | | |
| A | FR-A-2 247 720 (COULTER ELECTRONICS) * page 15; figure 1 * | 1 | |
| | --- | | |
| A | GB-A-2 020 806 (COULTER ELECTRONICS) * abstract; figure 1 * | 1 | |
| | --- | | |
| A | US-A-4 338 280 (P.J. AMBERS) * abstract * | 1 | |
| | --- | | TECHNICAL FIELDS SEARCHED (Int. Cl. 3) |
| A | US-A-4 318 885 (N. SUZUKI et al.) * abstract; figure 1 * | 1 | G 01 N   1/00 G 01 N   35/00 |
| | ----- | | |

The present search report has been drawn up for all claims

| Place of search | Date of completion of the search | Examiner |
|---|---|---|
| THE HAGUE | 25-09-1984 | ANTHONY R.G. |